# EUROPÄISCHE PATENTANMELDUNG

(11) **EP 4 599 913 A1**
(43) Veröffentlichungstag der Anmeldung: **13.08.2025**
(21) Anmeldenummer: 24157132.2
(22) Anmeldetag: 12.02.2024
(51) Int. Cl.: B01D 46/00, B01D 46/121

(54) **FILTER MIT V-FÖRMIG ANGEORDNETEN FILTERMEDIENPAKETEN UND EINEM RAHMEN**

(71) Anmelder: Carl Freudenberg KG, 69469 Weinheim (DE)
(72) Erfinder: Weber, Patrick, 69469 Weinheim (DE); Schumacher, Sascha, 69483 Wald-Michelbach (DE)

(57) **Zusammenfassung**

Die Erfindung betrifft einen Kassettenfilter (100) zur Filtration eines Luftstroms mit einer Mehrzahl von Filtermedienpaketen (2), wobei ein Paar Filtermedienpakete (2) v-förmig angeordnet ist und mit einem Rahmen (1) zur Aufnahme der Filtermedienpakete (2),
wobei der Rahmen (1) einen anströmseitige Kopfrahmen (10), zwei Seitenplatten (30) und mehrere abströmseitige Fußplatten-Traversen (20) aufweist, wobei einem jeweiligen Paar an v-förmig angeordneten Filtermedienpaketen (2) eine Fußplatten-Traverse (20) zugeordnet ist, wobei der Filter zusätzlich Schutzgitter (40) besitzt, wobei je ein Schutzgitter je einem Filtermedienpaket reingasseitig zugeordnet ist.

Erfindungsgemäß bilden die einem jeweiligen Paar an Filtermedienpaketen (2) zugeordneten Schutzgitter (40) und die Fußplatten-Traverse (20) eine bauliche Einheit (24).

Ein solcher Rahmen hat in vorteilhafter Weise einen einfachen und fertigungstechnisch günstigen Aufbau.

## Beschreibung

Die Erfindung betrifft einen Kassettenfilter mit einer Mehrzahl von Filtermedienpaketen, wobei je zwei Filtermedienpakete v-förmig angeordnet sind, und mit einem Rahmen zur Aufnahme der Filtermedienpakete.

### Stand der Technik

In Gasturbinen, Kompressoren, Klima- und Lüftungsanlagen kommen unterschiedlichste Filter zur Reinigung von Zuluftströmen zum Einsatz, z.B. Kassettenfilter.

Aus der EP 3 831 461 A1 ist ein derartiger Kassettenfilter mit einer Mehrzahl von Filtermedienpaketen bekannt, wobei je zwei Filtermedienpakete v-förmig angeordnet sind und die Filtermedienpakete von einem Gas zu dessen Reinigung von einer Rohgasseite des Filters zu einer Reingasseite des Filters durchströmt werden. Solche Filter werden auch als V-Zellen-Filter bzw. im Englischen als V-Bank-Filter bezeichnet. Der Filter besitzt einen Rahmen zur Aufnahme der Filtermedienpakete mit Schutzgittern für das Filtermedium, wobei je ein Schutzgitter reingasseitig an einem jeweiligen Filtermedienpaket angeordnet ist.

Solche Schutzgitter werden auch als Berstschutzgitter bezeichnet. Durch die Schutzgitter kann das Filtermedium in seiner Position gehalten und vor Beeinträchtigung und Beschädigung, insbesondere bei der Montage und im Betrieb, geschützt werden. Durch die Schutzgitter wird verhindert, dass sich Teile des Filtermediums lösen und in nachfolgende Anlagen gelangen und dort Schäden verursachen könnten, wie z.B. in Gasturbinen.

Nachteilig an diesem Filter ist der aufwändige Zusammenbau aus einer Mehrzahl von Einzelteilen und sich ergebende Herausforderungen bei der Kraftflussgestaltung durch die vielen Teile.

Einen Filter mit einem ähnlichen Aufbau zeigt die US 2014 096493 A1 und die US 9 737 838 B2.

Ein solcher Filter kann schubladenartig in ein rechteckiges Schubfach einer Filteraufnahme eingeschoben werden. Mit Auflageflächen des Kopfrahmens liegt der Filter dann an der Filteraufnahme an und kann mit dieser verbunden werden, z.B. durch Verschrauben. Üblich ist, dass eine Filteraufnahme eine Mehrzahl von Fächern aufweist, um eine entsprechende Mehrzahl von Filtern aufnehmen zu können, welche dann matrixartig angeordnet sind und eine sogenannte Filterwand bilden.

Im Betrieb des Filters auf die Bauteile des Filters wirkende Kräfte werden über den Kopfrahmen in die Filteraufnahme mit den Schubfächern und einer Trägerkonstruktion abgeleitet. Auf die Elemente des Filters selbst wirkende Kräfte erfordern, dass die Elemente des Filters gut miteinander verbunden sind, z.B. verklebt. Nachteilig bei diesen bekannten Filtern ist deren aufwändige Gestaltung der Verbindung der Rahmenelemente und der Schutzgitter und dafür erforderlicher Bauraum. Insbesondere auf die Verbindungsnähte aus Vergussmasse wirken im Betrieb des Kassettenfilters hohe Kräfte. Besonders die Schutzgitter müssen gut befestigt sein, damit sie ihre Funktion erfüllen. Dazu wird in der Regel eine große Menge an Vergussmasse verwendet. Nachteilig ist, dass eine gewisse Instabilität bzw. mangelnde Festigkeit des Filters verbleibt. Kommt es zu Verformungen oder Brüchen, so können Undichtigkeiten entstehen und im Betrieb kommt es zu Leckage.

### Aufgabenstellung

Aufgabe der vorliegenden Erfindung ist es einen Kassettenfilter zu schaffen, dessen Rahmen einen einfachen, stabilen und fertigungstechnisch günstigen Aufbau hat.

Weitere Aufgabe ist es, einen Kassettenfilter mit einem Rahmen zu schaffen, der eine optimierte Verbindungssicherheit aufweist.

### Technische Lösung

Gelöst werden diese Aufgaben durch Kassettenfilter wie sie nachfolgend beschrieben und beansprucht sind.

Erfindungsgemäß wurde als vorteilhaft erkannt einen Kassettenfilter aus nur wenigen Elementen zu bilden, welche bei der Montage des Filters einfach miteinander verbunden werden können, einen guten Kraftfluss durch den Filter aufweisen und eine hohe Stabilität des Filters gewährleisten.

Die Erfindung betrifft einen Kassettenfilter mit einer Mehrzahl von Filtermedienpaketen, wobei je zwei Filtermedienpakete immer paarweise v-förmig in einem spitzen Winkel zueinander angeordnet sind, und mit einem Rahmen zur Aufnahme der Filtermedienpakete. Ein solcher Filter wird auch als V-Zellen-Filter bzw. im Englischen als V-Bank-Filter bezeichnet. Die Filtermedienpakete werden von einem Gas zu dessen Reinigung von einer Rohgasseite des Filters zu einer Reingasseite des Filters in einer Hauptdurchströmungsrichtung (kurz: Durchströmungsrichtung) durchströmt, insbesondere von Luft.

Der Rahmen weist einen anströmseitigen Kopfrahmen, zwei Seitenplatten und mehrere abströmseitige Fußplatten-Traversen auf, wobei einem jeweiligen Paar an v-förmig angeordneten Filtermedienpaketen eine Fußplatten-Traverse zugeordnet ist. Zusätzlich besitzt der Filter Schutzgitter, um die Filtermedienpakte im Betrieb des Kassettenfilters sicher in ihrer Position zu halten, wobei je ein Schutzgitter je einem Filtermedienpaket reingasseitig zugeordnet ist. Die Filtermedienpakete können beispielsweise Faltenbalge aus plissiertem Filtermedium besitzen.

Erfindungsgemäß bilden die einem jeweiligen Paar an Filtermedienpaketen zugeordneten Schutzgitter und die zugeordnete Fußplatten-Traverse eine bauliche Einheit.

Schutzgitter meint hier eine Stützstruktur mit mindestens einer sich in Längsrichtung und mindestens einer sich in Querrichtung des Schutzgitters erstreckenden Strebe. Die Stützstruktur verhindert, dass sich Teile der Filtermedienpakte im Betrieb lösen und reingasseitig in dem Kassettenfilter nachgeordneten Anlagen Zerstörungen hervorrufen könnten. Ein solches Schutzgitter kann z.B. rechenförmig, kammförmig, netzförmig, insbesondere spinnennetzförmig, zaunförmig oder gitterförmig ausgestaltet sein.

Bauliche Einheit meint nicht notwendiger Weise, dass die beiden Schutzgitter und die Fußplatten-Traverse einer baulichen Einheit auch einteilig und materialeinheitlich ausgeführt sind. Es werden die Funktionen der beiden Schutzgitter und der Fußplattentraverse jeweils in einer baulichen Einheit integriert. Die beiden Schutzgitter und die Fußplattentraverse einer baulichen Einheit sind jedoch so miteinander verbunden, dass sie bei der Fertigung des Rahmens des Kassettenfilters als ein Teil mit den weiteren Elementen zum Rahmen zusammengefügt werden können.

Ein solcher Rahmen hat in vorteilhafter Weise einen einfachen und fertigungstechnisch günstigen Aufbau. Da die Schutzgitter nicht - wie im Stand der Technik üblich - mit den Fußplatten-Traversen verklebt werden müssen, können die Fußplatten-Traversen schmal ausgestaltet werden. Dies hat einen positiven Effekt auf den Strömungswiderstand des Kassettenfilters.

Da die Schutzgitter und die Fußplatten-Traverse eine bauliche Einheit bilden, kann der jeweilige Übergang von den Schutzgittern zur Fußplatten-Traverse materialeinheitlich ausgestaltet sein, sodass der Übergang - im Unterscheid zum Stand der Technik - keine Schwachstelle mehr ausbildet und vielmehr kraftflussoptimiert ist. In dem Bereich des Übergangs liegt damit eine höhere Biegesteifigkeit vor.

Auch vorteilhaft ist, dass die Menge an erforderlicher Vergussmasse bei der Herstellung des Kassettenfilters reduziert werden kann, da die Schutzgitter nicht mit diese aufnehmenden Teilen des Rahmens vergossen werden müssen. Der verwendeten Vergussmasse kommt nur noch die Aufgabe zu, die Filtermedienpakete mit dem Rahmen zu verbinden.

Auch muss am Rahmen kein Bauraum zur Aufnahme der Schutzgitter vorgesehen werden, sodass - bei gleichen Abmaßen des Kassettenfilters - die Höhe der Filtermedienpakete vergrößert und damit die Filtration verbessert werden kann. Im Fall von Filtermedienpaketen mit plissiertem Filtermedium kann die Faltenhöhe erhöht und damit die wirksame Filterfläche vergrößert werden.

In besonders vorteilhafter Ausgestaltung des Kassettenfilters besteht die jeweilige bauliche Einheit aus zwei Bauteilen. Diese sind fertigungstechnisch einfacher zu realisieren als eine einteilige Ausgestaltung der baulichen Einheit. Die beiden Bauteile sind so ausgestaltet, dass sie fertigungstechnisch einfach zu der baulichen Einheit verbunden werden können und verbunden sind.

In alternativer Ausgestaltung sind die baulichen Einheiten einteilig und materialeinheitlich ausgeführt.

In einer möglichen Ausgestaltung sind die beiden Bauteile einer jeweiligen baulichen Einheit formschlüssig miteinander verbunden. Dies ist vorteilhaft, da so der Bedarf an Vergussmasse weiter reduziert werden kann und eine besonders stabile Verbindung geschaffen wird.

In einer möglichen Ausgestaltung weist ein jeweiliges Bauteil einer jeweiligen baulichen Einheit in seinem Querschnitt eine L-Form auf mit zwei Schenkeln und das jeweilige besitzt Bauteil je zwei winklig zueinander angeordnete Flächen. Die beiden L-förmigen Bauteile einer baulichen Einheit bilden zusammen eine U-Form, sprich: die bauliche Einheit weist eine U-Form auf. Die bauliche Einheit hat somit die Form einer Rinne und kann Vergussmasse aufnehmen. Die Vergussmasse, welche u.a. die Filtermedienpakete mit der baulichen Einheit verbindet, also verklebt, kann zusätzlich auch eine stoffschlüssige Verbindung der beiden Bauteile einer jeweiligen baulichen Einheit schaffen.

In Weiterbildung bilden die jeweils kürzeren Schenkel der beiden Bauteile zusammen eine Fußplatten-Traverse und bildet der jeweils längere Schenkel jeweils ein Schutzgitter. Durch diese spezifische Ausgestaltung ist eine Ausführungsform offenbart, bei welcher der Übergang von einem Schutzgitter zur Fußplatten-Traverse materialeinheitlich ohne Stoßstelle auskommt und damit kraftflussoptimiert ist.

In Weiterbildung stoßen die Bauteile einer jeweiligen baulichen Einheit mit Stoßkanten ihrer kürzeren Schenkel aneinander und die Stoßkanten sind komplementär zueinander ausgeformt und in Längsrichtung entlang der Stoßkante mit einem Profil versehen. Durch die beiden komplementären Stoßkanten kann fertigungstechnisch besonders elegant eine formschlüssige Verbindung der beiden Bauteile erreicht werden.

Die Stoßkanten können dabei labyrinthartig ausgestaltet sein und eine Labyrinthdichtung ausbilden, sodass eine dichte, vergusstaugliche Rinne geformt wird.

Zusätzlich oder alternativ können im Bereich der Stoßkanten Rastnasen und Rasttaschen oder Rastlaschen ausgestaltet sein. Rastnasen und Rasttaschen oder Rastlaschen sind dabei als Clip-Verbindungen mit Rastmechanismen ausgeformt, sodass die die beiden Bauteile besonders einfach, exakt und schnell miteinander verrastet und so verbunden werden können.

In einer möglichen Ausführungsform sind die beiden Bauteile einer jeweiligen baulichen Einheit als Gleichteile ausgebildet. So wird eine besonders kostengünstige Herstellung der baulichen Einheit ermöglicht. Bei komplementärer Ausgestaltung des Profils der Stoßkanten sind diese punktsymmetrisch, wobei das Symmetriezentrum in der Mitte der Fußplatten-Traverse liegt.

In Weiterbildung des Kassettenfilters sind die Fußplatten-Traversen mit Versteifungselementen versehen, welche sich von dem einen Schutzgitter der baulichen Einheit zum anderen Schutzgitter der baulichen Einheit erstrecken, z.B. kann das Material der baulichen Einheit im Bereich der Versteifungselemente eine größere Dicke aufweisen. Die Fußplatten-Traversen sind im Betrieb des Kassettenfilters durch die auf die Schutzgitter wirkenden Kräfte einer Biegespannung ausgesetzt. Dank der Versteifungselemente kann in vorteilhafter Weise einem Aufbiegen der baulichen Einheit entgegengewirkt werden.

In besonders vorteilhafter Weiterbildung weisen die Schutzgitter eine Gitterstruktur auf mit einer Mehrzahl von zentrisch um mindestens ein Zentrum des Schutzgitters angeordneten geschlossenen Kurven unterschiedlicher Größe z.B. konzentrischen ringförmigen Kurven und weisen eine Vielzahl von radial zum Zentrum des Schutzgitters orientierten Verbindern auf, welche die geschlossenen Kurven miteinander verbinden. Sowohl die Kurven als auch die Verbinder bilden die Stege des Schutzgitters aus. Die Schutzgitter besitzen damit eine spinnennetzförmige Gitterstruktur.

In vorteilhafter Weise können durch diese Gitterstruktur auf das Schutzgitter wirkende Kräfte gut und gleichmäßig verteilt werden und anschließend in den Rahmen des Kassettenfilters abgeleitet werden. In anderen Worten: Durch dieses Design des Schutzgitters findet eine gleichmäßigere Kräfteverteilung auf alle vier Seiten des Rahmens statt, was eine homogenere Spannungsverteilung im Schutzgitter bewirkt und somit beispielsweise schmälere Strukturen der Stege bei gleicher Funktionalität ermöglicht.

Geschlossene Kurven meint hier, dass die Kurven zwar an manchen Stellen kleine Unterbrechungen aufweisen können. Die Kurven sind also nicht im mathematischen Sinn stetig oder zusammenhängend, bilden jedoch einen Steg der Gitterstruktur aus, welcher gekennzeichnet ist durch eine geschlossene Erstreckung um das Zentrum des Schutzgitters herum.

Berechnungen haben ergeben, dass sich einzelnen Unterbrechungen in den geschlossenen Kurven, insbesondere auch in den Randbereichen des Schutzgitters nicht nachteilig auf die Stabilität des Schutzgitters auswirken. Für die genaue und weitere Ausgestaltung wird hiermit vollinhaltlich Bezug genommen auf die DE 10 2022 117 649.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter beispielhafter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1 a und b: einen Filter in zwei Ansichten
- Fig. 2: eine Explosionsdarstellung eines Filters
- Fig. 3a -c: eine bauliche Einheit aus zwei Teilen
- Fig. 4: eine bauliche Einheit aus nur einem Teil
- Fig. 5: eine Variante der baulichen Einheit aus den Figuren 3a-c

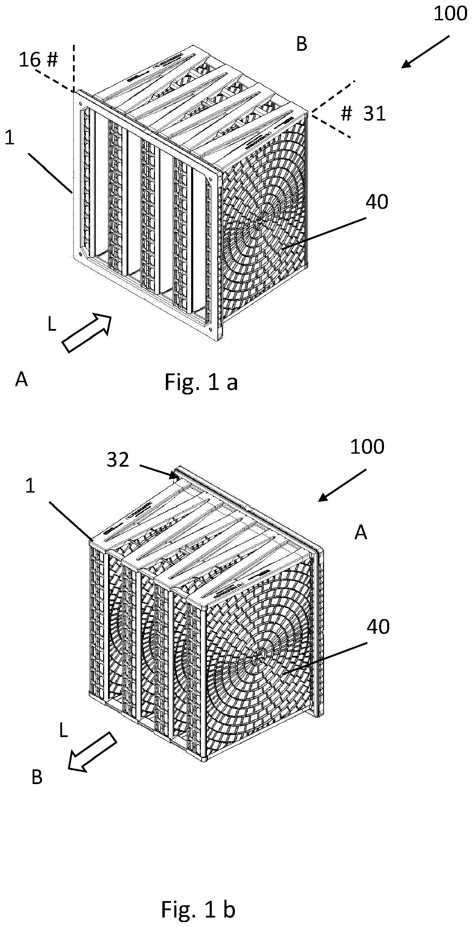

Fig. 1 a und b zeigen einen erfindungsgemäßen Kassettenfilter 100 in zwei perspektivischen Ansichten.

Der Kassettenfilter 100 besitzt acht Filtermedienpakete 2 welche aus plissiertem Filtermedium gebildet sein können. Je zwei Filtermedienpakete 2 sind immer paarweise v-förmig in einem spitzen Winkel zueinander angeordnet. Die Filtermedienpakete 2 werden von einem Gas zu dessen Reinigung von einer Rohgasseite A des Filters 100 zu einer Reingasseite B des Filters 100 in Durchströmungsrichtung L durchströmt.

Fig. 1a zeigt den Filter 100 von der Rohgasseite A und Fig. 1b von der Reingasseite B.

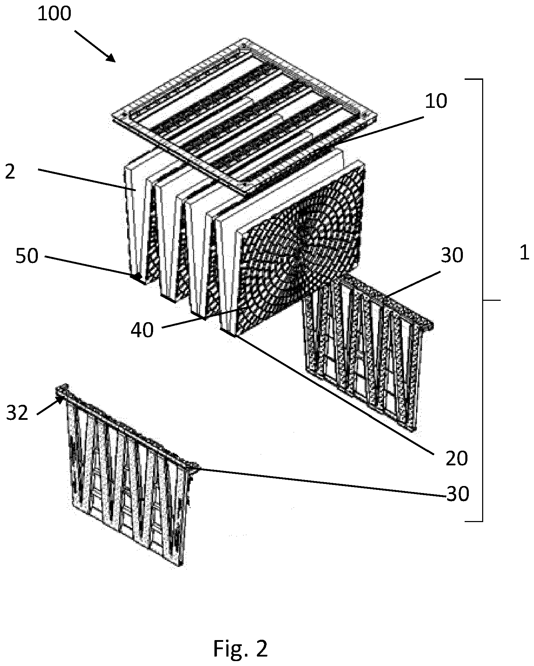

Zur Aufnahme der Filtermedienpakete 2 ist ein Rahmen 1 vorgesehen. Der Aufbau des Rahmens 1 ergibt sich näher aus Fig. 2. In Fig. 1a ist die Ebene 16 angedeutet, in welcher sich der Kopfrahmen befindet und die Ebene 31, in welcher sich die (im Bild oben liegende) Seitenplatte 30 befindet.

Je ein Schutzgitter 40 ist reingasseitig (A) an einem jeweiligen Filtermedienpaket 2 angeordnet. Durch die Schutzgitter 40 wird das Filtermedium der Filtermedienpakete 2 in ihrer Position gehalten, vor Beeinträchtigung geschützt und nachfolgende Anlagen vor Beschädigung bewahrt. In der dargestellten Ausführungsform bilden je zwei Schutzgitter 40 zusammen mit einer Fußplatten-Traverse 20 eine bauliche Einheit 24. Diese kann einteilig oder mehrteilig als Spritzgussteil sein.

Fig. 2 zeigt eine Explosionsdarstellung eines Kassettenfilters 100 in einer möglichen erfindungsgemäßen Ausführung und den Aufbau des Rahmens 1. Der Rahmen 1 besitzt einen Kopfrahmen 10 mit mehreren Traversen und parallel dazu angeordnete Fußplatten-Traversen 20 sowie dazwischen und senkrecht dazu angeordnete Seitenplatten 30. Die Filtermedienpakete 2 sind zwischen Kopfrahmen 10, Fußplatten-Traversen 20 und Seitenplatten 30 angeordnet, reingasseitig durch Schutzgitter 40 geschützt und im Rahmen 1 aufgenommen. Zwei einem Paar von Filtermedienpaketen 2 zugeordnete Schutzgitter 40 bilden zusammen mit der zugeordneten Fußplatten-Traverse 20 eine bauliche Einheit 24. Die Filtermedienpakete 2 können mittels Vergussmasse 50 mit den baulichen Einheiten 24 stoffschlüssig verbunden sein.

Der Filter 100 kann schubladenartig in ein rechteckiges Schubfach einer Filteraufnahme eingeschoben werden (nicht dargestellt). Mit Auflageflächen des Kopfrahmens 10 am Absatz 32 liegt der Filter 100 dann an der Filteraufnahme an und kann mit dieser verbunden werden, z.B. durch Verschrauben. Auch möglich ist, dass eine Filteraufnahme eine Mehrzahl von Fächern aufweist, um eine entsprechende Mehrzahl von Filtern 100 aufnehmen zu können, welche dann matrixartig angeordnet sind und eine sogenannte Filterwand bilden.

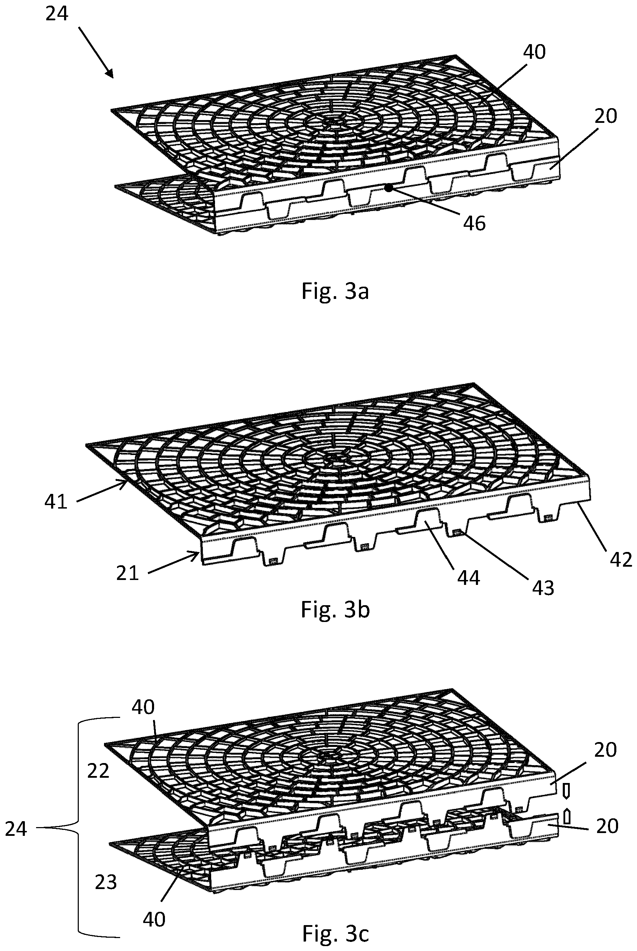

Fig. 3a -c zeigen eine bauliche Einheit 24 aus zwei Teilen 22, 23, wobei die beiden Bauteile 22, 23 formschlüssig miteinander verbunden sind. Fig. 3a zeigt die bauliche Einheit 24, Fig. 3b eines der beiden Bauteile 22, 23 und Fig. 3c. zeigt, wie die beiden Bauteile 22, 23 zur baulichen Einheit 24 zusammengesetzt werden.

Ein jeweiliges Bauteil 22, 23 weist in seinem Querschnitt eine L-Form auf mit zwei Schenkeln 21, 41 und das Bauteil 22, 23 besitzt je zwei winklig zueinander angeordnete Flächen. Die jeweils kürzeren Schenkel 21 der beiden Bauteile 22, 23 bilden zusammen eine Fußplatten-Traverse 20 und der jeweils längere Schenkel 41 bildet jeweils ein Schutzgitter 40.

Die Bauteile 22, 23 stoßen mit Stoßkanten 42 ihrer kürzeren Schenkel 21 aneinander und die Stoßkanten 42 sind komplementär zueinander ausgeformt. Dabei weisen sie komplementär ausgeformte Rastnasen 43 und Rasttaschen 44, welche beim Zusammenschieben der beiden Teile (vgl. Pfeile in Fig. 3c) miteinander verrasten.

Die Stoßkanten 42 sind zusätzlich labyrinthartig ausgestaltet und bilden eine Labyrinthdichtung. Derartige Labyrinthdichtungen sind dem Fachmann aus der Dichtungstechnik allgemein bekannt, weshalb hier auf eine detailliertere Darstellung verzichtet wird.

Es ist zu erkennen, dass die beiden Bauteile 22, 23 als Gleichteile ausgebildet sind. Das Profil der Stoßkanten 42 ist punktsymmetrisch zum in der Mitte der Fußplattentraverse liegendem Symmetriezentrum 46

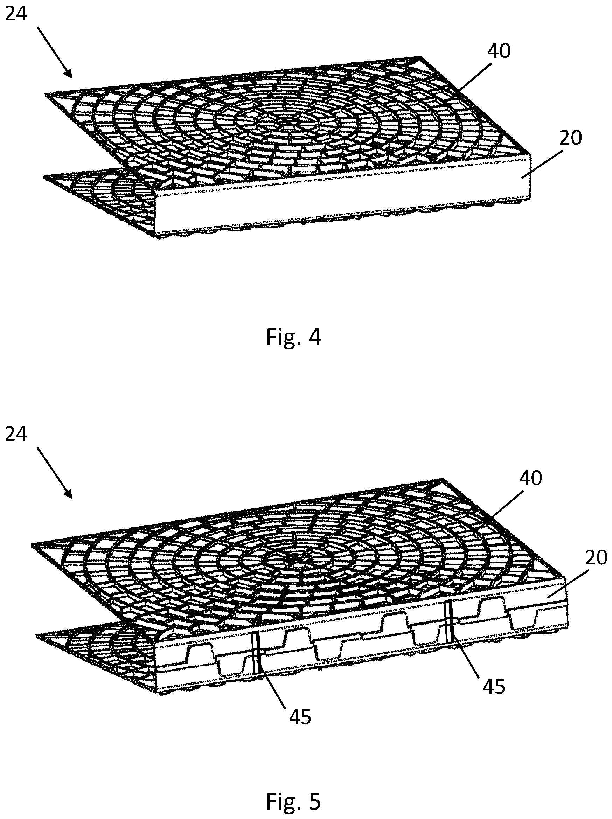

Fig. 5 zeigt eine Variante der zuvor beschriebenen baulichen Einheit 24.

Die Fußplatten-Traverse 20 ist dabei jedoch mit Versteifungselementen 45 versehen, welche sich von dem einen Schutzgitter 40 der baulichen Einheit 24 zum anderen Schutzgitter 40 der baulichen Einheit 24 erstrecken.

Fig. 4 zeigt eine bauliche Einheit 24 aus nur einem Teil.

Bezugszeichenliste
- 1: Rahmen
- 2: Filtermedienpaket

- 10: Kopfrahmen

- 16: Ebene des Kopfrahmens

- 20: Fußplatten-Traverse
- 21: kürzerer Schenkel
- 22: erstes Bauteil
- 23: zweites Bauteil
- 24: bauliche Einheit

- 30: Seitenplatte
- 31: Ebene der Seitenplatte
- 32: Absatz

- 40: Schutzgitter
- 41: längerer Schenkel
- 42: Stoßkante
- 43: Rastnase
- 44: Rasttasche
- 45: Versteifungselement
- 46: Symmetriezentrum des Profils der Stoßkanten

- 50: Position Vergussmasse
- 100: Kassettenfilter

- A: Rohgasseite
- B: Reingasseite
- L: Durchströmungsrichtung

## Patentansprüche

1. Kassettenfilter (100) zur Filtration eines Luftstroms mit einer Mehrzahl von Filtermedienpaketen (2), wobei ein Paar Filtermedienpakete (2) v-förmig angeordnet sind und mit einem Rahmen (1) zur Aufnahme der Filtermedienpakete (2),
wobei der Rahmen (1) einen anströmseitige Kopfrahmen (10), zwei Seitenplatten (30) und mehrere abströmseitige Fußplatten-Traversen (20) aufweist, wobei einem jeweiligen Paar an v-förmig angeordneten Filtermedienpaketen (2) eine Fußplatten-Traverse (20) zugeordnet ist, wobei der Filter zusätzlich Schutzgitter (40) besitzt, wobei je ein Schutzgitter (40) je einem Filtermedienpaket (2) reingasseitig zugeordnet ist,
**dadurch gekennzeichnet, dass**
die einem jeweiligen Paar an Filtermedienpaketen (2) zugeordneten Schutzgitter (40) und die Fußplatten-Traverse (20) eine bauliche Einheit (24) bilden.

2. Kassettenfilter nach Anspruch 1, **dadurch gekennzeichnet, dass**
die bauliche Einheit (24) aus zwei Bauteilen (22, 23) besteht.

3. Kassettenfilter nach Anspruch 2, **dadurch gekennzeichnet, dass**
die beiden Bauteile (22, 23) formschlüssig miteinander verbunden sind.

4. Kassettenfilter nach einem der Ansprüche 2 bis 3, **dadurch gekennzeichnet, dass**
ein jeweiliges Bauteil (22, 23) in seinem Querschnitt eine L-Form aufweist mit zwei Schenkeln (21, 41) und das Bauteil (22, 23) je zwei winklig zueinander angeordnete Flächen besitzt.

5. Kassettenfilter nach Anspruch 4, **dadurch gekennzeichnet, dass**
die jeweils kürzeren Schenkel (21) der beiden Bauteile (22, 23) zusammen eine Fußplatten-Traverse (20) bilden und der jeweils längere Schenkel (41) jeweils ein Schutzgitter (40) bildet.

6. Kassettenfilter nach einem der Ansprüche 4 bis 5, **dadurch gekennzeichnet, dass**
die Bauteile (22, 23) mit Stoßkanten (42) ihrer kürzeren Schenkel (21) aneinander stoßen und die Stoßkanten (42) komplementär zueinander ausgeformt sind.

7. Kassettenfilter nach Anspruch 6, **dadurch gekennzeichnet, dass**
die Stoßkanten (42) labyrinthartig ausgestaltet sind.

8. Kassettenfilter nach Anspruch 6 oder 7, **dadurch gekennzeichnet, dass** im Bereich der Stoßkanten (42) Rastnasen (43) und Rasttaschen (44) oder Rastlaschen ausgestaltet sind.

9. Kassettenfilter nach einem der Ansprüche 2 bis 8, **dadurch gekennzeichnet, dass**
die beiden Bauteile (22, 23) als Gleichteile ausgebildet sind.

10. Kassettenfilter nach einem der vorangehenden Ansprüche, **dadurch gekennzeichnet, dass**
die Fußplatten-Traversen (20) mit Versteifungselementen (45) versehen sind, welche sich von dem einen Schutzgitter (40) der baulichen Einheit (24) zum anderen Schutzgitter (40) der baulichen Einheit (24) erstrecken.

11. Kassettenfilter nach einem der vorangehenden Ansprüche, **dadurch gekennzeichnet, dass**
die Schutzgitter (40) eine Gitterstruktur aufweisen mit zentrisch um mindestens ein Zentrum des Schutzgitters (40) angeordneten geschlossenen Kurven unterschiedlicher Größe und mit einer Vielzahl von radial zum Zentrum des Schutzgitters (40) orientierten Verbindern, welche die geschlossenen Kurven miteinander verbinden.
